# EUROPÄISCHE PATENTSCHRIFT

(11) **EP 0 490 121 B1**
(45) Veröffentlichungstag und Bekanntmachung des Hinweises auf die Patenterteilung: **02.05.1997**
(21) Anmeldenummer: 91119608.7
(22) Anmeldetag: 18.11.1991
(51) Int. Cl.: G06K 13/08, G07C 7/00

(54) **Vorrichtung zum Transportieren von Datenträgern**
Device for transporting a data carrier
Dispositif pour transporter un support de données

(30) Priorität: 07.12.1990 DE 4039036
(43) Veröffentlichungstag der Anmeldung: 17.06.1992
(73) Patentinhaber: VDO Adolf Schindling AG, 60326 Frankfurt/Main (DE)
(72) Erfinder: Knauer, Norbert, Dipl.-Ing. (FH), W-7218 Trossingen (DE)

(56) Entgegenhaltungen:
- DE-A- 1 923 987
- DE-A- 2 756 518
- DE-A- 3 807 286
- DE-B- 1 284 129

## Beschreibung

Die Erfindung betrifft eine Vorrichtung zum Transportieren von Datenträgern in einem Registriergerät mit einem zwischen einer Eingabe-/Entnahmeöffnung und einer Registrierposition vorgesehenen Führungsschacht, mit Transportrollen und den Transportrollen zugeordneten, federnd gelagerten Gegendruckrollen welche durch Öffnungen in den Wänden des Führungsschachtes in den Führungsschacht eingreifen, wobei für die Lagerung einer den Gegendruckrollen zugeordneten Welle ein flacher, aus federungsfähigem Material hergestellter Träger vorgesehen ist, welcher an der einen Wand des Führungsschachtes befestigt ist und an welchem zwei als Blattfedern wirkende Arme mit daran angeformten Lagerschalen für die Aufnahme der Welle ausgebildet sind.

Für Registriergeräte, insbesondere solche, die für den Einbau in Armaturenbrettern und Instrumentenkonsolen von Kraftfahrzeugen vorgesehen sind, wird neuerdings gefordert, daß sie eine möglichst niedrige Bauhöhe aufweisen. Diese Forderung kann erfüllt werden, indem ein Registrierkonzept Anwendung findet, bei dem die Datenausgabe auf Aufzeichnungs- oder Druckträger erfolgt, die durch eine schlitzförmige Öffnung in das Registriergerät eingegeben und innerhalb des Registriergerätes selbsttätig transportiert werden. Die bei diesem Registrierkonzept verwendeten Datenträger, beispielsweise Diagrammscheiben oder Diagrammkarten oder blattförmige Druckträger, erfordern eine gewisse Steifigkeit, um ein problemloses Handhaben beim Eingeben und Entnehmen zu gewährleisten und auch unabhängig von dem betreffenden Registriergerät, beispielsweise als personenbezogene Arbeitszeitdatenträger auf einfache Weise handhabbar und transportabel zu sein. Einen entscheidenden Einfluß auf die Handhabbarkeit des Datenträgers hat ferner die ergonomisch optimierte Zuordnung des Registriergerätes zum Benutzer, d. h. die Eingabe-/Entnahmeebene bzw. Vorsteckebene und die Registrierebene stehen je nach Einbausituation unter verschiedenen, bezüglich des Transports der Datenträger vielfach auch unter ungünstigen Winkeln zueinander.

Diese Ausgangsbedingungen, nämlich eine niedrige Bauhöhe, ein Einsatz in Kraftfahrzeugen und die in diesem Zusammenhang gegebenen mechanischen und klimatischen Anforderungen sowie eine problemlose Handhabbarkeit der Datenträger stellen besondere Anforderungen auch an die Transportvorrichtung des betreffenden Registriergerätes. Diese muß, was die der Erfindung zugrunde liegende Aufgabe darstellt, an den eng dimensionierten Aufbau des Registriergerätes angepaßt sein und dennoch eine störungssichere Funktion bieten, andererseits aber auch für die Serienfertigung geeignet sein.

Mit der DE-A 3 807 286 ist eine Vorrichtung zum Transport von Datenträgern in einem Registriergerät der gattungsgemäßen Art bekannt geworden, bei welcher der die Welle der Gegendruckrollen aufnehmende Träger als zweiarmige Blattfeder ausgebildet ist, die flach an einer als Montageplatte dienenden Wand des Führungsschachtes befestigt ist. Bei einer derartigen Anordnung steht eine relativ umfangreiche Fläche der als Montageplatte dienenden Wand für das Anbringen anderer Bauelemente nicht mehr zur Verfügung. Außerdem beansprucht diese Anordnung insofern mehr Bauhöhe, als die Blattfeder, um im Funktionsszustand federungsfähig zu sein, von der Wand angehoben sein muß, das heißt, daß Gegendruckrollen mit relativ großen Durchmesser erforderlich sind.

Die Lösung der gestellten Aufgabe sieht vor, daß der jochförmig ausgebildete Träger mit der Wand in deren Stirnbereich selbstsichernd verbindbar ist und daß die Arme derart mäanderartig an dem Träger angeformt sind, daß ihre freien Enden gegen den Träger weisen.

Ein bevorzugtes Kennzeichen der Erfindung ist es, daß der Träger beiderseits einer Mittenlinie parallel zu den Armen angewinkelt ist, daß an der Wand des Führungsschachtes, welcher der Träger zugeordnet ist, in Bewegungsrichtung der Datenträger Einschnitte vorgesehen sind und daß der Träger mit der Wand derart verbunden ist, daß er im Zusammenwirken mit den Einschnitten unter elastischer Verformung zwischen der bezogen auf den Führungsschacht Außen- und Innenseite der Wand eingespannt ist.

Weitere vorteilhafte Ausbildungen beschreiben die hier nicht zitierten Unteransprüche.

Die Erfindung ist insbesondere für solche Registriergeräte geeignet, deren Aufbau möglichst dicht bestückte und mit geringem Abstand übereinander angeordnete Montageplatten aufweist. Diese Eignung besteht darin, daß einerseits wenig Plattenfläche, andererseits wenig Bauhöhe zwischen den Montageplatten erforderlich ist, um die Gegendruckrollen der Transportvorrichtung federnd zu lagern. Dabei ist der als ein Teil hergestellte Träger, der für die federnde Lagerung der Welle der Gegendruckrolle vorgesehen ist, mit der betreffenden Montageplatte, welche eine Wand des Führungsschachtes darstellt, lediglich durch Aufstecken verbindbar, wobei nur ein schmaler Randbereich der Montageplatte für die Befestigung des Trägers benötigt wird, d. h. die gefundene Vorrichtung ist mit geringem Aufwand herstell- und montierbar und auch für die Serienfertigung geeignet. Ein besonderer Vorteil der gefundenen Lösung ist aber auch darin zu sehen, daß die Welle der Gegendruckrollen in unmittelbarer Nähe der Befestigungsstelle des Trägers federnd gelagert ist.

Der Träger kann ferner zusammen mit der Welle der Gegendruckrollen als Baugruppe vormontiert werden, und er ist derart ausgebildet, daß er bezüglich der in das Registriergerät eingegebenen Datenträger eine Führungsfunktion ausübt, indem er die Datenträger zum Transportspalt umlenkt. Dadurch ist es auf einfache Weise möglich, für die verschiedensten Winkelpositionen zwischen den Abschnitten des Führungsschachtes bzw. zwischen der Registrierebene und der Eingabe-/Entnahmeebene eine zuverlässige Führung auch für relativ steife Datenträger in Richtung des Transportspaltes zu schaffen.

Erwähnenswert ist ferner, daß der Träger für die Befestigung und die Führungsfunktion einerseits eine relativ hohe Steifigkeit aufweisen muß und daß durch das mäanderartige Umlenken der Lagerarme andererseits auf einfache Weise eine Abstimmung der Federungsfähigkeit der Lagerung der Gegendruckrollen bei relativ geringem Raumbedarf vorgenommen werden kann.

Das im folgenden zu beschreibende Ausführungsbeispiel geht von zwei Transportrollen aus, denen jeweils eine Gegendruckrolle zugeordnet ist. Die Transportvorrichtung kann aber auch derart gestaltet sein, daß eine Transportrolle mit einer oder mit zwei Gegendruckrollen, die in der erfindungsgemäßen Weise gelagert sind, zusammenwirkt.

Im folgenden sei ein Ausführungsbeispiel der Erfindung anhand der beigefügten Zeichnungen näher erläutert. Es zeigen
Fig. 1 eine Schnittdarstellung der erfindungsgemäßen Transportvorrichtung,
Fig. 2 eine Draufsicht gemäß der Schnittdarstellung Fig. 1 ohne Darstellung des Gehäuses,

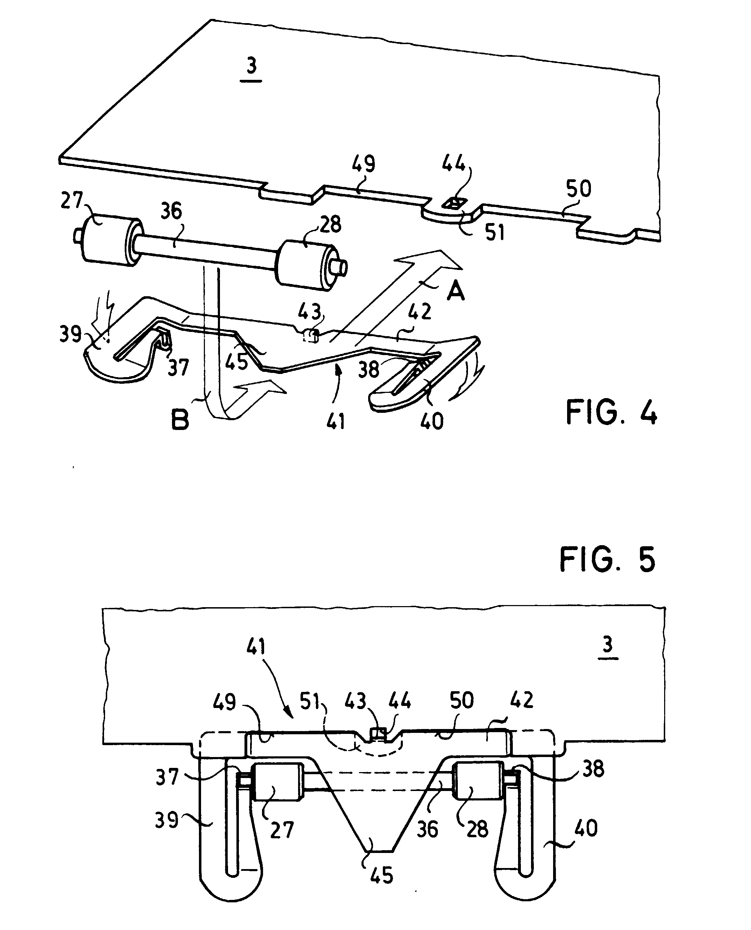

Fig. 3 eine Ausschnittvergrößerung der Schnittdarstellung Fig. 1,
Fig. 4 eine perspektivische Darstellung der Montage der Lageranordnung der Gegendruckrollen,
Fig. 5 eine Draufsicht der montierten Lageranordnung der Gegendruckrollen.

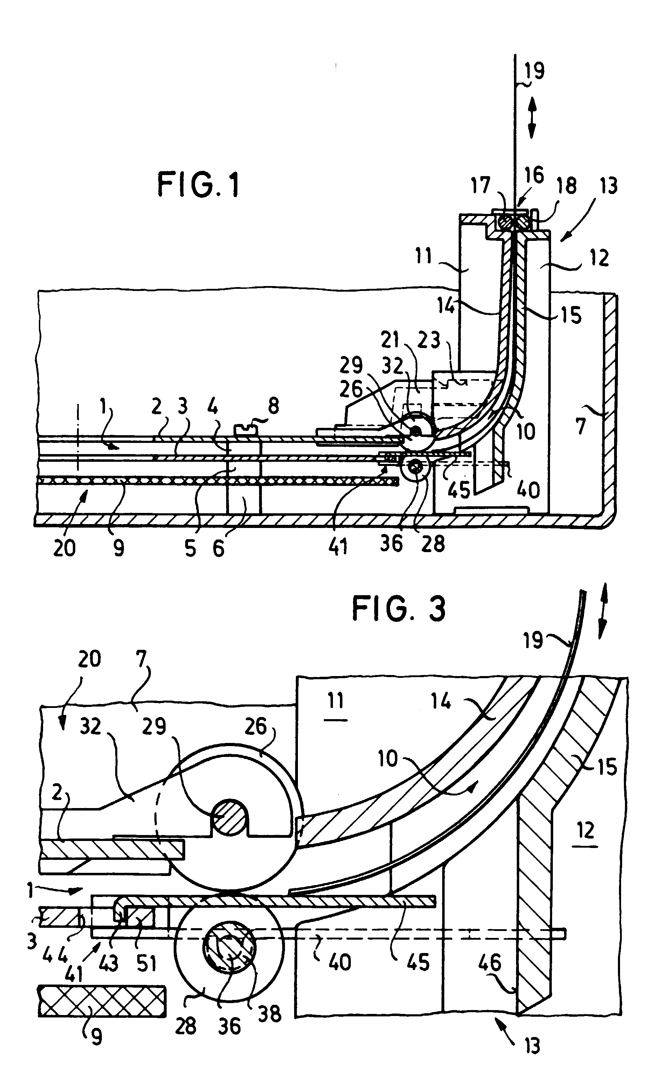

Gemäß der Schnittdarstellung Fig. 1 greifen die Transportmittel der erfindungsgemäßen Transportvorrichtung in einen Führungsschacht eines Registriergerätes ein, welches der Übersicht halber lediglich skelettartig dargestellt ist. Der Führungsschacht weist einen ersten Abschnitt 1 auf, dessen Wände von parallel zueinander angeordneten Montageplatten 2 und 3, die ihrerseits unter Verwendung geeigneter Distanzkörper 4, 5, 6 mit dem Gehäuse 7 des Registriergerätes verschraubt (8) sind, gebildet werden. Die Montageplatten 2 und 3 tragen vorzugsweise die Antriebs- und Registriermittel des Registriergerätes. Eine parallel zugeordnete Leiterplatte 9 ist mit elektronischen Bauelementen für die Registriersteuerung und Meßwertumformung bestückt.

Ein zweiter Abschnitt 10 des Führungsschachtes wird von zwei Bauteilen 11 und 12 gebildet, die zu einer in das Registriergerät einsetzbaren Eingabe-/Entnahmebaugruppe 13 zusammengefügt sind. Die den Abschnitt 10 des Führungsschachtes begrenzenden Wände 14 bzw. 15 der Bauteile 11 und 12 sind bei dem dargestellten Ausführungsbeispiel schalenförmig ausgebildet, d. h. die zwischen den Montageplatten 2 und 3 und einem Ein-/Ausgabeschlitz 16 erforderliche Umlenkung und somit Krümmung des Führungsschachtes ist in die spritzgußtechnisch leicht herstellbaren Bauteile 11 und 12 gelegt mit dem Vorteil, daß für die Montageplatten 2 und 3 in Outsert-Spritzgußtechnik bestückbare, ebene Metallplatten verwendet werden können. Mit 17 und 18 sind in an den Bauteilen 11 und 12 angeformten Kulissen gelagerte, zylindrische Stangen bezeichnet, die den Ein-/Ausgabeschlitz 16 begrenzen und eine Führung bei der Ein-/Ausgabe eines Datenträgers 19, beispielsweise einer Diagrammscheibe, bilden.

Die Eingabe-/Entnahmebaugruppe 13 und die aus den Montageplatten 2 und 3 sowie der Leiterplatte 9 bestehende Registrierbaugruppe 20 sind mittels zweier Kupplungszapfen 21 und 22, die mit Rippen versehen ausgebildet und denen an dem Bauteil 11 angeformte Kammern 23 und 24 zugeordnet sind, miteinander verbunden.

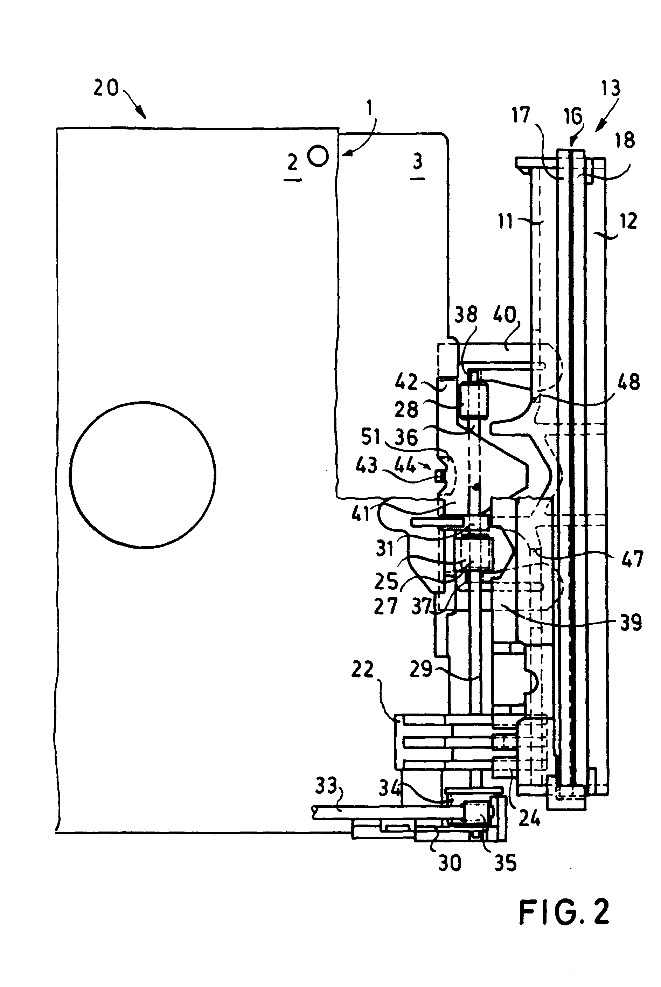

Die Transportmittel des Registriergerätes, d. h. die Transportrollen 25 und 26 sowie diesen zugeordnete Gegendruckrollen 27 und 28 greifen in einen nicht bezeichneten Spalt zwischen den Abschnitten 1 und 10 des Führungsschachtes in den Führungsschacht ein. Dabei sind die Transportrollen 25, 26 auf einer Transportwelle 29 befestigt, welche in an der Montageplatte 2 angeformten, teilweise als Lagerschalen ausgebildeten Lagerungen, von denen drei - 30, 31, 32 - in den Fig. 1 und 2 dargestellt sind, gelagert ist. Der Antrieb der Transportwelle 29 erfolgt über eine mit einem nicht dargestellten Laufwerk in getrieblicher Verbindung stehende Antriebswelle 33, die ihrerseits über ein Schraubenradgetriebe 34, 35 mit der Transportwelle 29 getrieblich in Eingriff steht. Die mit den Transportrollen 25, 26 kraftschlüssig in Verbindung stehenden Gegendruckrollen 27 und 28 sind auf einer Welle 36 befestigt, die in Lagerschalen 37 und 38 gelagert ist, welche an federnden Armen 39 und 40 eines an der Montageplatte 3 befestigten Trägers 41 ausgebildet sind.

Im folgenden sei die Lageranordnung der Gegendruckrollen, insbesondere die Ausbildung und Montage des Trägers 41 an der Montageplatte 3 näher betrachtet. Der Träger 41 ist aus einem federungsfähigen Material vorzugsweise aus geeignetem Blech hergestellt. Die an einem Joch 42 des Trägers 41 angeformten, federnden Arme 39 und 40, an deren freien Enden die Lagerschalen 37 und 38 ausgebildet sind, sind mäanderartig gegen das Joch 42 zurückgeführt. Durch die auf diese Weise geschaffene, relativ große Länge der federnden Arme 39 und 40 wird auch bei sonst steifer Ausbildung des Joches 42 eine geeignete Federungskonstante und somit eine Anpreßkraft erzielt, bei der Transportspuren auf den Datenträgern vermieden sind. Das Anwinkeln des Joches 42 in Richtung der Arme 39 und 40 dient dem Schaffen einer geeigneten Vorspannung für eine selbstsichernde Befestigung des Trägers 41 an der Montageplatte 3 bei gleichzeitig ebener Anlage der abgewinkelten Jochteile.

Zur Sicherung gegen ein Abziehen des Trägers 41 von der Montageplatte 3 ist ein Finger 43 vorgesehen, dem in der Montageplatte 3 eine Öffnung 44 zugeordnet ist. Eine am Träger 41 ausgebildete Führungszunge 45 hat die Aufgabe der Übernahme der eingegebenen bzw. vorgesteckten Datenträger und deren Umlenkung in Richtung des Transportspaltes zwischen den Transportrollen 25, 26 und den Gegendruckrollen 27 und 28. Somit befindet sich, wenn der Träger 41 an der Montageplatte 3 befestigt ist, der Transportspalt im wesentlichen in oder wenig außerhalb einer durch die Zunge 45 bestimmten Ebene, d. h. die Zunge 45 ragt in den Führungsschachtabschnitt 10 der Eingabe-/Entnahmebaugruppe 13 hinein, sie schneidet den Führungsschacht sozusagen und greift in eine Freisparung 46 in der Wand 15 hindurch. Mit 47 und 48 (Fig. 2) sind Durchbrüche im Bauteil 12 bezeichnet, die ein Durchgreifen der Federarme 39 und 40 gestatten.

Für die Montage des Trägers 41 sind an der Montageplatte 3 zwei Einschnitte 49 und 50 vorgesehen. Zwischen den Einschnitten 49 und 50 verbleibt eine Auflage 51, so daß an der Montageplatte stirnseitig eine Art offene Spange ausgebildet ist, auf welcher der Träger 41 bei der Montage in Pfeilrichtung A aufgeschoben bzw. aufgesteckt wird. Dabei werden die angewinkelten Enden des Joches 42 zurückgebogen und an der Schachtaußenseite der Montageplatte 3 angelegt. Gleichzeitig wird der mittlere Bereich des Joches 42 auf die Auflage 51 aufgeschoben und der Finger 43 in die Öffnung 44 eingerastet. Der Träger 41 ist danach unter elastischer Verformung an der Montageplatte 3 befestigt, mit anderen Worten, zwischen der Außenseite und der Innenseite einer Wand des Führungsschachtes eingespannt. Vorzugsweise wird die Welle 36 mit den darauf befestigten Gegendruckrollen 27 und 28 erst nach der Montage des Trägers 41 in Richtung des Pfeiles B in die Lagerschalen 37 und 38 eingesetzt. Die Montage der Welle 36 ist jedoch auch bereits vor der Montage des Trägers 41 an der Montageplatte 3 möglich, d. h. es läßt sich eine vormontierbare Lageranordnung schaffen, bei der im vormontierten Zustand die in die Lagerschalen 37 und 38 eingelegte Welle 36 durch die Zunge 45 gehalten wird.

## Patentansprüche

1. Vorrichtung zum Transportieren von Datenträgern (19) in einem Registriergerät mit einem zwischen einer Eingabe-/Entnahmeöffnung (16) und einer Registrierposition vorgesehenen Führungsschacht (1, 10), mit Transportrollen (25, 26) und den Transportrollen (25, 26) zugeordneten, federnd gelagerten Gegendruckrollen (27, 28), welche durch Öffnungen in den Wänden (2, 3 und 14, 15) des Führungsschachtes (1, 10) in den Führungsschacht (1, 10) eingreifen, wobei für die Lagerung einer den Gegendruckrollen (27, 28) zugeordneten Welle (36) ein flacher, aus federungsfähigem Material hergestellter Träger (41) vorgesehen ist, welcher an der einen Wand (3) des Führungsschachtes (1, 10) befestigt ist und an welchem zwei als Blattfedern wirkende Arme (39, 40) mit daran angeformten Lagerschalen (37, 38) für die Aufnahme der Welle (36) ausgebildet sind,
**dadurch gekennzeichnet,**
daß der jochförmig ausgebildete Träger (41) mit der Wand (3) in deren Stirnbereich selbstsichernd verbindbar ist und
daß die Arme (39, 40) derart mäanderartig an dem Träger (41) angeformt sind, daß ihre freien Enden gegen den Träger (41) weisen.

2. Vorrichtung nach Anspruch 1,
**dadurch gekennzeichnet,**
daß der Träger (41) beiderseits einer Mittenlinie parallel zu den Armen (39, 40) angewinkelt ist,
daß an der Wand (3) des Führungsschachtes (1, 10), welcher der Träger (41) zugeordnet ist, in Bewegungsrichtung der Datenträger (19) Einschnitte (49, 50) vorgesehen sind und
daß der Träger (41) mit der Wand (3) derart verbunden ist,
daß er im Zusammenwirken mit den Einschnitten (49, 50) unter elastischer Verformung zwischen der bezogen auf den Führungsschacht (1, 10) Außen- und Innenseite der Wand (3) eingespannt ist.

3. Vorrichtung nach Anspruch 1,
dadurch gekennzeichnet,
daß an dem Träger (41) ein Finger (43) angebogen ist und
daß dem Finger (43) in der Wand (3) eine Öffnung (44) zugeordnet ist.

4. Vorrichtung nach Anspruch 1,
dadurch gekennzeichnet,
daß an dem Träger (41) eine in Richtung der Arme (39, 40) weisende und zwischen den Gegendruckrollen (27, 28) durchgreifende Führungszunge (45) ausgebildet ist.

5. Vorrichtung nach Anspruch 1,
dadurch gekennzeichnet,
daß das Registriergerät eine Registrierbaugruppe (20) und eine mit dieser verbindbare, dem Vorstecken der Datenträger (19) dienende Eingabe-/Entnahmebaugruppe (13) aufweist, daß Transport- und Gegendruckrollen (25, 26, 27, 28) in einem Zwischenraum zwischen der Registrierbaugruppe (20) und der Eingabe-/Entnahmebaugruppe (13) angeordnet sind und daß die im wesentlichen in der Ebene des Spalts zwischen den Transport- und Gegendruckrollen (25, 26, 27, 28) angeordnete Führungszunge (45) in den Führungsschachtabschnitt (10) der Eingabe-/Entnahmebaugruppe (13) eingreift.

## Claims

1. An apparatus for transporting data carriers (19) in a recording device, having a guide chute (1, 10) which is provided between an insertion/removal opening (16) and a recording position, having transporting rollers (25, 26) and having resiliently mounted counter-pressure rollers (27, 28) which are associated with the transporting rollers (25, 26) and engage in the guide chute (1, 10) through openings in the walls (2, 3 and 14, 15) of the guide chute (1, 10), there being provided for mounting of a shaft (36) associated with the counter-pressure rollers (27, 28) a flat support (41) which is made from resilient material and is secured to the one wall (3) of the guide chute (1, 10) and on which there are constructed two arms (39, 40) acting as leaf springs, with bearing shells (37, 38) integrally formed thereon for receiving the shaft (36), characterized in that the support (41), which is of yoke-shaped construction, may be connected to the wall (3) in the end region thereof in self-securing manner, and in that the arms (39, 40) are integrally formed on the support (41) in serpentine configuration such that their free ends point towards the support (41).

2. An apparatus according to Claim 1, characterized in that the support (41) is angled on either side of a centre line parallel to the arms (39, 40), in that incisions (49, 50) are provided in the wall (3) of the guide chute (1, 10) with which the support (41) is associated, in the direction of movement of the data carriers (19), and in that the support (41) is connected to the wall (3) such that in cooperation with the incisions (49, 50) it is tensioned under elastic deformation between the outer and inner sides of the wall (3) relative to the guide chute (1, 10).

3. An apparatus according to Claim 1, characterized in that a finger (43) is arranged bent from the support (41), and in that there is associated with the finger (43) an opening (44) in the wall (3).

4. An apparatus according to Claim 1, characterized in that there is constructed on the support (41) a guide tab (45) which points in the direction of the arms (39, 40) and reaches through between the counter-pressure rollers (27, 28).

5. An apparatus according to Claim 1, characterized in that the recording device has a recording assembly (20) and, connectable thereto, an insertion/removal assembly (13) serving for feeding the data carriers (19), in that transporting and counter-pressure rollers (25, 26, 27, 28) are arranged in an intermediate space between the recording assembly (20) and the insertion/removal assembly (13), and in that the guide tab (45), which is arranged substantially in the plane of the gap between the transporting and counter-pressure rollers (25, 26, 27, 28) engages in the guide chute section (10) of the insertion/removal assembly (13).

## Revendications

1. Dispositif pour le transport de supports de données (19) dans un appareil enregistreur avec un puits de guidage (1, 10) prévu entre une ouverture d'introduction/prélèvement (16) et une position d'enregistrement, avec des roulettes de transport (25, 26) et, associées aux dites roulettes de transport (25, 26), des roulettes de contre-pression (27, 28) montées élastiquement qui, par des ouvertures pratiquées dans les parois (2, 3 et 14, 15) dudit puits de guidage (1, 10), s'engagent dans ledit puits de guidage (1, 10), un support plat (41) fabriqué en un matériau élastique étant prévu pour le montage d'un arbre (36) associé aux dites roulettes de contre-pression (27, 28) qui est fixé sur l'une des parois (3) dudit puits de guidage (1, 10) et sur lequel sont réalisés deux bras (39, 40) assumant la fonction de ressorts à lames avec des coquilles de coussinet (37, 38) formées dessus pour le logement de l'arbre (36),
caractérisé par le fait
que le support (41) réalisé en forme de fourche peut être assemblé de manière indesserrable avec la paroi (3), dans la zone frontale de celle-ci, et
que les bras (39, 40) sont réalisés en forme de méandre sur le support (41) de telle sorte que leurs extrémités libres soient dirigées vers ledit support (41).

2. Dispositif selon la revendication 1,
caractérisé par le fait
que le support (41) est coudé de part et d'autre d'une ligne médiane parallèlement aux bras (39, 40),
que sur la paroi (3) du puits de guidage (1, 10) à laquelle est associé le support (41) sont prévues des encoches (49, 50) dans le sens de déplacement des supports de données (19) et que ledit support (41) est assemblé avec la paroi (3) de telle sorte que, en coopérant avec lesdites encoches (49, 50), il soit enserré, avec une déformation élastique, entre, par rapport au puits de guidage (1, 10), les faces extérieures et intérieures de la paroi (3).

3. Dispositif selon la revendication 1,
caractérisé par le fait
que sur le support (41) est cintré un doigt (43) et
qu'audit doigt (43) est associée dans la paroi (3) une ouverture (44).

4. Dispositif selon la revendication 1,
caractérisé par le fait
que sur le support (41) est formée une languette de guidage (45) orientée en direction des bras (39, 40) et traversant entre les roulettes de contre-pression (27, 28).

5. Dispositif selon la revendication 1,
caractérisé par le fait
que l'appareil enregistreur présente un sous-ensemble d'enregistrement (20) et un sous-ensemble d'introduction/prélèvement (13) pouvant être assemblé avec ledit sous-ensemble d'enregistrement (20) et servant au préenfichage des supports de données (19,
que des roulettes de transport et de contre-pression (25, 26, 27, 28) sont disposées dans un interstice entre ledit sous-ensemble d'enregistrement (20) et le sous-ensemble d'introduction/prélèvement (13) et
que la languette de guidage (45) disposée, pour l'essentiel, dans la plan de la fente entre les roulettes de transport et de contre-pression (25, 26, 27, 28) s'engage dans le segment (10) du puits de guidage du sous-ensemble d'introduction/prélèvement (13).
